# EUROPEAN PATENT APPLICATION

(11) **EP 4 678 569 A1**
(43) Date of publication of application: **14.01.2026**
(21) Application number: 24187797.6
(22) Date of filing: 10.07.2024
(51) Int. Cl.: B65G 47/38, B65G 47/96, B65G 25/04

(54) **A SORTING DEVICE**

(71) Applicant: Eurosort B.V., 1243 HV 's-Graveland (NL)
(72) Inventor: de Jong, Wiebe, 1014 ZE Amsterdam (NL); Zwart, Wouter, 2051 JA Overveen (NL); van Haaster, Patrick Theodorus Johannes, 2191 AS De Zilk (NL)
(74) Representative: De Vries & Metman

(57) **Abstract**

A sorting device (1) comprises a frame (2), a carriage (3) for supporting a product (P) to be sorted, an input (6) where a product (P) to be sorted is receivable by the carriage (3) and a plurality of receiving locations (7) for receiving a product (P) that is discharged from the carriage (3) when the carriage (3) is located at a selected one of the receiving locations (7), which receiving locations (7) are located next to each other along a sorting path. The carriage (3) has a chassis (4, 74) that is supported by the frame (2) and drivable with respect to the frame (2) in longitudinal direction of the sorting path in a first direction (X) and an opposite second direction (Y). The carriage (3) is provided with a discharging system (10, 24, 43, 55, 76) for discharging a product (P) from the carriage (3) and an actuator (11, 25, 47, 60, 83) for activating the discharging system (10, 24, 43, 55, 76). At the receiving locations (7) the frame (2) is provided with respective activating elements (15, 26, 50), which are selectively lockable to the actuator (11, 25, 47, 60, 83) of the carriage (3) such that the actuator (11, 25, 47, 60, 83) is locked with respect to an activating element (15, 26, 50) corresponding to a selected one of the receiving locations (7) when driving the chassis (4, 74) with respect to the frame (2) in the second direction (Y) at the sorting path. The chassis (4, 74) is drivable in the first direction (X) towards an activating element (15, 26, 50) corresponding to a selected one of the receiving locations (7) so as to lock the actuator (11, 25, 47, 60, 83) and the activating element (15, 26, 50) to each other. The discharging system (10, 24, 43, 55, 76) is adapted such that when the actuator (11, 25, 47, 60, 83) and the activating element (15, 26, 50) are locked to each other the actuator (11, 25, 47, 60, 83) activates the discharging system (10, 24, 43, 55, 76) upon driving the chassis (4, 74) in the second direction (Y) at the sorting path.

## Description

The present invention relates to a sorting device.

A sorting device is a system designed to distribute separate products to different destinations. Such a sorting device is often located in a warehouse. A lot of different types of sorting devices are well-known in the prior art.

An object of the invention is to provide a sorting device which has a relatively simple manner of controlling a sorting action.

This object is accomplished with the sorting device according to the invention, which comprises a frame, a carriage for supporting a product to be sorted, an input where a product to be sorted is receivable by the carriage, a plurality of receiving locations for receiving a product that is discharged from the carriage when the carriage is located at a selected one of the receiving locations, which receiving locations are located next to each other along a sorting path, wherein the carriage has a chassis that is supported by the frame and drivable with respect to the frame in longitudinal direction of the sorting path in a first direction and an opposite second direction, wherein the carriage is provided with a discharging system for discharging a product from the carriage and an actuator for activating the discharging system, wherein at the receiving locations the frame is provided with respective activating elements, which are selectively lockable to the actuator of the carriage such that the actuator is locked with respect to an activating element corresponding to a selected one of the receiving locations when driving the chassis with respect to the frame in the second direction at the sorting path, wherein the chassis is drivable in the first direction towards an activating element corresponding to a selected one of the receiving locations so as to lock the actuator and the activating element to each other, wherein the discharging system is adapted such that when the actuator and the activating element are locked to each other the actuator activates the discharging system upon driving the chassis in the second direction at the sorting path.

Under operating conditions the carriage which has received a product at the input can be driven in the first direction towards a target receiving location where the actuator and the activating element that corresponds to a target receiving location are locked to each other. Subsequently, the chassis can be driven with respect to the frame in the second direction which automatically activates the discharging system of the carriage such that the product is transferred from the carriage to the target receiving location. An advantage of the sorting device according to the invention is that the discharging system is functionally coupled to driving the chassis in the second direction such that discharging is automatically started upon driving the chassis in the second direction. This means that a sorting action can be performed by driving the chassis only, i.e. it has to be moved to a selected receiving location at the sorting path where the actuator and the activating element are locked to each other after which the chassis is driven in the second direction to discharge a product from the carriage. Hence, the sorting device according to the invention provides a relatively simple manner of controlling a sorting action, without requiring separate means for controlling a discharging action. The chassis may be driven by a belt or a toothed belt, but numerous alternative driving means are conceivable.

It is noted that the chassis is drivable with respect to the frame in longitudinal direction of the sorting path in a first direction and an opposite second direction, which means that the chassis is at least drivable parallel to the sorting path. When the actuator activates the discharging system upon driving the chassis in the second direction the chassis is located at the sorting path. It is also noted that driving the chassis in the second direction at the sorting path does not necessarily result in displacing the chassis in the second direction. It is also possible that the actuator locks the chassis with respect to the frame whereas driving the chassis in the second direction at the sorting path, i.e. trying to move the chassis in the second direction, results in activating the discharging system.

In a particular embodiment the actuator is movable with respect to the chassis and/or the activating elements are movable with respect to the frame, wherein the actuator and the activating elements are adapted such that during driving the chassis in the first direction towards a selected receiving location the actuator contacts at least one of the activating elements thereby moving the actuator with respect to the chassis and/or the activating element with respect to the frame such that the actuator can freely pass the activating element, whereas after the actuator passes the activating element of the selected receiving location the actuator is forced back towards an original position thereof and/or the activating element is forced back towards an original position thereof, whereas upon driving the chassis in the second direction after the actuator passes the activating element corresponding to the selected receiving location the actuator and the activating element hook behind each other so as to lock the actuator with respect to the activating element upon driving the chassis with respect to the frame in the second direction. This means that the actuator may freely pass one or more activating elements when moving the chassis in the first direction before arriving at the activating element corresponding to a selected receiving location, but as soon as the chassis is stopped and driven in the second direction the actuator and the activating element corresponding to the selected receiving location will hook behind each other. In this case the locking action may be entirely mechanical, without requiring the use of electronic control means, for example. The actuator and/or the activating element may be forced back towards an original position thereof with respect to the chassis and the frame, respectively, through a weight or a spring, for example.

In an embodiment the discharging system comprises a tilt tray for supporting a product, which tilt tray is rotatably mounted to the chassis through a tilt tray hinge, wherein the actuator comprises a locking member for locking the tilt tray with respect to the chassis when the chassis is driven in the first direction, wherein upon driving the chassis in the second direction after the locking member passes the activating element corresponding to the selected receiving location the locking member and the activating element hook behind each other thereby de-locking the locking member and the tilt tray with respect to each other to allow the tilt tray to tilt downwardly by gravity. The tilt tray hinge may have a tilting axis which extends transversely with respect to the sorting path.

In a further aspect, the activating elements are movable with respect to the frame for allowing the actuator to freely pass the activating element when the chassis is driven in the first direction, wherein the locking member comprises a locking arm including a recess for receiving a locking pin of the tilt tray so as to lock the tilt tray to the locking arm, which locking pin is located at a distance from the tilt tray hinge, wherein the locking arm is rotatably mounted to the chassis and has a fixed position with respect to the chassis when the recess accommodates the locking pin and the chassis is driven in the first direction, wherein upon driving the chassis in the second direction after the locking arm passes the activating element corresponding to the selected receiving location the locking arm hooks behind the activating element thereby loosening the locking pin from the locking arm, hence allowing the tilt tray to tilt downwardly by gravity.

The frame may be provided with a resetting guide for rotating the tilt tray with respect to the chassis to an original position during driving the chassis to the input after discharging a product from the carriage.

In an alternative embodiment the carriage comprises a tray for supporting a product and the discharging system comprises a pushing element which is located above the tray and movable with respect to the tray in a direction along the sorting path, wherein the actuator is mounted to the pushing element, wherein upon driving the chassis in the second direction after the actuator passes the activating element corresponding to the selected receiving location the actuator and the activating element hook behind each other thereby holding the pushing element at a fixed place with respect to the frame. In this case the chassis is moved in the second direction whereas the pushing element is stationary with respect to the frame such that it can push a product from the tray. The tray may be fixed to the chassis.

In a further aspect the actuator comprises a lever which is rotatably mounted to the pushing element and the activating elements are respective lifting members which are fixed to the frame for rotating the lever with respect to the pushing element when the chassis is driven in the first direction so as to allow the lever to freely pass the lifting members, wherein upon driving the chassis in the second direction after the lever passes the lifting member corresponding to the selected receiving location the lever hooks behind the lifting member thereby holding the pushing element at a fixed place with respect to the frame.

The chassis may be provided with a de-locking system for de-locking the actuator from the activating element, wherein the de-locking system is located beyond the actuator as seen in the first direction such that the pushing element travels together with the chassis in the second direction after the chassis has moved with respect to the pushing element in the second direction over a predefined distance. Although the pushing element travels together with the chassis in the second direction it may still not be in its original position such as in case of leaving the input before a sorting action.

In a further aspect the frame is provided with a resetting element for moving the pushing element back to an original position with respect to the tray, wherein the resetting element is located beyond the receiving locations as seen in the second direction, and the pushing element is provided with an auxiliary actuator, which resetting element and auxiliary actuator are adapted such that when the auxiliary actuator passes the resetting element in the second direction the auxiliary actuator and the resetting element hook behind each other when the chassis is subsequently driven in the first direction thereby holding the pushing element at a fixed place with respect to the frame, wherein the chassis is also provided with a de-locking device for de-locking the auxiliary actuator and the resetting element with respect to each other which de-locking device is located such that when the pushing element arrives in its original position during driving the chassis in the first direction the auxiliary actuator and the resetting element are de-locked with respect to each other. the resetting element may be located beyond the input as seen in the second direction.

In another alternative embodiment the discharging system comprises a tilt tray for supporting a product, which tilt tray is mounted to the chassis and rotatable with respect to the chassis between a transporting position and an inclined discharging position and locked with respect to the chassis from the transporting position in a direction opposite to the discharging position, a driving wheel which is fixed to the tilt tray such that the driving wheel and the tilt tray are rotatable with respect to the chassis about a common tilting axis and an endless driving belt which is in engagement with the driving wheel such that when the driving belt drives the driving wheel in a direction in which it is locked with respect to the chassis the chassis is driven in the first direction through the driving wheel thereby moving in the first direction, whereas the chassis is held at a fixed position by the actuator when the driving belt drives the chassis in the second direction through the driving wheel when the actuator and the activating element hook behind each other, hence rotating the tilt tray from the transporting position to the discharging position whereas the chassis remains at the same position with respect to the frame. When the chassis is driven in the first direction it moves in the first direction, since the driving belt remains in a fixed position with respect to the driving wheel. When the chassis is driven in the second direction whereas it is held at a fixed position with respect to the frame it does not move in the second direction but the tilt tray is rotated.

This embodiment may also be provided with resetting means for returning the tilt tray back to its original orientation, which can be performed by driving the chassis in the first direction such that the driving wheel is first rotated in opposite direction until the tilt tray is locked with respect to the chassis without moving the chassis in the first direction, after which the chassis is moved in the first direction so as to unlock the actuator and the activating element with respect to each other.

In another alternative embodiment the carriage comprises a tray for supporting a product and the discharging system comprises a pushing element which is located above the tray and movable with respect to the tray between a rest position and a discharging position, wherein in the rest position the pushing element is locked with respect to the tray in a direction from the discharging position to the rest position, wherein a driving wheel is rotatably mounted to the chassis and drivably coupled to the pushing element through an endless belt, wherein an endless driving belt is in engagement with the driving wheel such that when the driving belt drives the driving wheel in one direction when the pushing element is in the rest position the chassis is moved in the first direction through the driving wheel, whereas the chassis is held at a fixed position by the actuator when the driving belt drives the driving wheel in opposite direction and the actuator and the activating element hook behind each other, hence moving the pushing element from the rest position to the discharging position through the endless belt. The tray may be fixed to the chassis. When the chassis is driven in the first direction the driving wheel and the driving belt have a fixed position with respect to each other such that the chassis is moved in the first direction. In fact the chassis is indirectly driven in the second direction via the driving belt but does not move in the second direction during movement of the pushing element.

This embodiment may also be provided with resetting means for returning the pushing element back to its original position, which can be performed by driving the chassis in the first direction such that the pushing element is first moved in opposite direction until it is locked with respect to the chassis without moving the chassis in the first direction, after which the chassis is moved in the first direction so as to unlock the actuator and the activating element with respect to each other.

In another alternative embodiment the discharging system comprises an inclined tray for supporting a product and a door at a lower end of the inclined tray for retaining the product on the inclined tray, which door is tiltable with respect to the chassis, wherein the actuator comprises a locking member for locking the door with respect to the chassis when the chassis is driven in the first direction, wherein upon driving the chassis in the second direction after the actuator passes the activating element corresponding to the selected receiving location the actuator and the activating element hook behind each other thereby de-locking the door and the locking member with respect to each other to allow the door to tilt downwardly by gravity. Upon opening the door the product can slide downwardly from the inclined tray. The door may have a tilting axis which extends in transverse direction of the sorting path.

The sorting path may extend horizontally.

In another alternative embodiment the sorting path extends vertically, wherein the carriage comprises an auxiliary chassis for supporting a product, wherein the actuator is located at the auxiliary chassis, which auxiliary chassis rests freely on the chassis such that the auxiliary chassis is moved simultaneously with the chassis in the first direction when the chassis is driven in the first direction and the actuator and the activating element corresponding to the selected receiving location are not locked with respect to each other, wherein the carriage comprises a transmission which is adapted such that upon driving the chassis in the second direction when the actuator and the activating element corresponding to the selected receiving location are locked to each other the chassis is moved in the second direction and the discharging system is operated through the transmission. When the actuator and the activating element corresponding to a selected one of the receiving locations are locked to each other the auxiliary chassis stays in place and the chassis moves in the second direction when the chassis is driven in the second direction.

In a further aspect the auxiliary chassis comprises a tray for supporting a product and the discharging system comprises a pushing element which is located above the tray and movable with respect to the tray, wherein the transmission comprises an endless belt to which the pushing element is fixed, wherein the endless belt is drivably coupled to a driving wheel which is rotatably mounted to the auxiliary chassis, wherein the driving wheel is drivably coupled to a pinion which in turn meshes with a rack at the chassis. The rack moves the pushing element upon driving the chassis in the second direction.

The carriage may follow the same track in the first direction and the second direction. This means that the carriage follows the sorting path in opposite directions.

The chassis may also be drivable with respect to the frame in transverse direction of the sorting path in order to drive the chassis to an activating element corresponding to a selected one of the receiving locations for locking the actuator and the activating element to each other. For example, the actuator and the activating element may cooperate such that they automatically interlock when the chassis is driven in transverse direction of the sorting path, such as through a rib which is received in a slot when the chassis is moved in transverse direction of the sorting path.

In the event that the sorting path extends horizontally, the sorting device may be provided with a buffer at the input for supporting a product to be received by the carriage, wherein the buffer comprises a buffer discharge system for transferring a product from the buffer to the carriage, which buffer discharge system cooperates with the carriage such that the buffer discharge system is activated by the chassis when the chassis engages the buffer discharge system. The chassis may engage the buffer discharge system during driving the chassis in the first and/or second direction. This means that the product can be transferred from the buffer to the carriage by displacement of the carriage only. When the carriage has delivered a product to one of the receiving locations the carriage can be moved back to the input in the second direction and contact the buffer discharge system such that the product on the buffer can be transferred to the carriage before or during the carriage moves in the first direction.

In a further aspect the carriage is movable below the buffer in the first direction and the second direction, wherein the buffer discharge system cooperates with the carriage such that when the chassis is driven in the second direction below the buffer the chassis and the buffer discharge system hook behind each other such that when the chassis subsequently moves in the first direction the chassis urges the buffer discharge system in the first direction, hence allowing the buffer discharge system to discharge a product from the buffer to the carriage, wherein the sorting device is provided with a decoupling system for decoupling the chassis from the buffer discharge system after a product is transferred from the buffer to the carriage. The buffer discharge system may comprise a pushing bar which is movable across a tray for supporting a product or a conveyor belt for supporting and transporting a product.

Alternatively, the buffer discharge system may comprise a bearing body, for example a plate, for supporting a product which is movable with respect to the frame and a pushing bar which is located above the bearing body and fixed to the frame, wherein the bearing body cooperates with the carriage such that when the chassis is driven in the second direction against the bearing body the bearing body is moved in the second direction below the pushing bar, wherein the buffer is provided with a reset system for moving the bearing body in the first direction when the chassis moves in the first direction. When the chassis is driven in the second direction against the bearing body and there is a product on the bearing body the pushing bar will push the product from the bearing body to the carriage which is pushing the bearing body in the second direction. The reset system may comprise a weight or a spring which move the bearing body back to its original position or the bearing body may rest on an inclined support such that it automatically moves in the first direction by gravity when the chassis is driven in the first direction.

The invention will hereafter be elucidated with reference to very schematic drawings showing embodiments of the invention by way of example.
Fig. 1 is a perspective view of an embodiment of a sorting device according to the invention.
Fig. 2 is an enlarge view of a part of the sorting device, which is indicated by II in Fig. 1.
Fig. 3 is a similar view as Fig. 1, but showing an alternative embodiment of the sorting device.
Fig. 4 is a similar view as Fig. 3, showing an enlarged cut-away view of the sorting device.
Fig. 5 is a similar view as Fig. 4 as seen from an opposite side.
Fig. 6 is a side view of another alternative embodiment of the sorting device.
Fig. 7 is a similar view as Fig. 1, but showing an alternative embodiment of the sorting device.
Fig. 8 is a similar view as Fig. 1, but showing an alternative embodiment of the sorting device.
Fig. 9 is a partly cut-away side view of the embodiment as shown in Fig. 8.
Fig. 10 is a similar view as Fig. 1, but showing an alternative embodiment of the sorting device.
Fig. 11 is an enlarged view of a part of the embodiment as shown in Fig. 10.
Fig. 12 is a similar view as Fig. 11, but showing the part from an opposite side.
Fig. 13 is a similar view as Fig. 10, but showing an alternative embodiment.
Fig. 14 is a similar view as Fig. 12, but showing an alternative embodiment.
Fig. 15 is a similar view as Fig. 1, but showing an alternative embodiment of the sorting device.
Fig. 16 is an enlarged view of a part of the embodiment as shown in Fig. 15.
Fig. 17 is an enlarged view of a part of the embodiment as shown in Fig. 15.
Fig. 18 is a similar view as Fig. 1, but showing an alternative embodiment of the sorting device.
Fig. 19 is an enlarged view of a part of the embodiment as shown in Fig. 18.
Fig. 20 is similar view as Fig. 19, but showing an opposite side thereof.

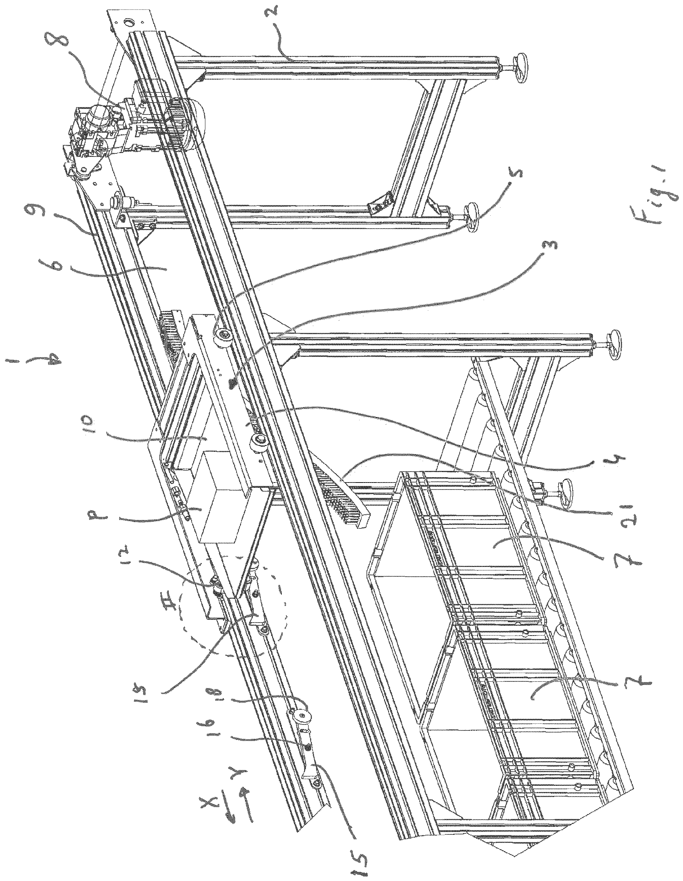

Fig. 1 shows an embodiment of a sorting device 1 according to the invention. The sorting device 1 comprises a frame 2 and a carriage 3 for supporting a product P to be sorted. The carriage 3 has a chassis 4 including freely rotatable wheels 5 which can roll on parallel rails of the frame 2. The carriage 3 is drivable along a horizontal sorting path in a first direction X and an opposite second direction Y. In this case the sorting path is rectilinear in a horizontal plane, but this may be different in an alternative embodiment. It is noted
that in this embodiment the carriage 3 follows the same track in the first direction X and the second direction Y. The sorting device 1 has an input 6 where a product P can be supplied to the carriage 3. This may be done manually or automatically.

A plurality of receiving locations in the form of boxes 7 for receiving a sorted product P are located between and below the rails of the frame 2. The boxes 7 are located behind each other along the sorting path. The carriage 3 is drivable by means of an electric motor 8 which drives an endless toothed belt 9 to which the chassis 4 is fixed. The electric motor 8 is controlled such that the carriage 3 is driven to a location above one of the boxes 7 which should receive the product P from the carriage 3 where a discharging system of the carriage 3 is activated.

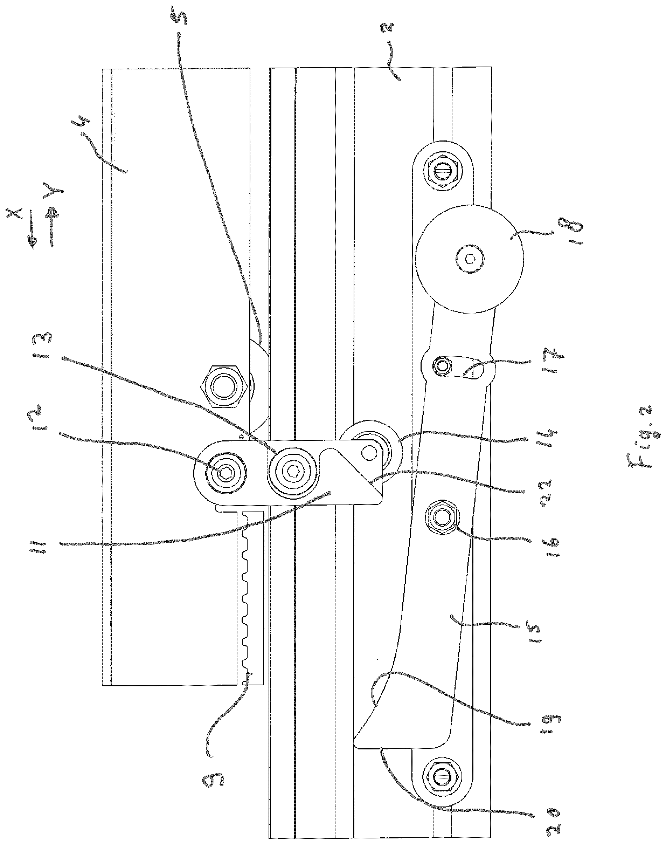

In the embodiment as shown in Fig. 1 the discharging system of the carriage 3 comprises a tilt tray 10 for supporting a product P. The carriage 3 is provided with an actuator for activating the discharging system in the form of a locking arm 11, see Fig. 2. The locking arm 11 is mounted to the chassis 4 of the carriage 3 and rotatable with respect to the chassis 4 through a pivot 12. The locking arm 11 comprises a recess in which a locking pin 13 of the tilt tray 10 fits when the locking arm 11 is in a locking position with respect to the chassis 4. The locking position is shown in Fig. 2. A lower end of the locking arm 11 is provided with a freely rotatable wheel 14. Referring to Fig. 2, when the locking arm 11 is rotated clockwise with respect to the chassis 4 from the locking position to an unlocking position, the locking pin 13 is no longer supported by the locking arm 11, which causes the tilt tray 10 to tilt downwardly by gravity.

At each of the boxes 7 the frame 2 is provided with an activating element in the form of a rocker arm 15 which can swivel about a hinge 16 within a predetermined angle which is limited by a pin on the frame 2 which fits in a slotted hole 17 of the rocker arm 15. One end of the rocker arm 15 is provided with a weight 18 in order to keep the rocker arm 15 in a predetermined orientation with respect to the frame 2 when the carriage 3 does not apply a force onto the rocker arm 15. This is a rest position of the rocker arm 15 with respect to the frame 2, which is shown in Fig. 2. An opposite end of the rocker arm 15 has an inclined contact surface 19 which lies at the same height level as the wheel 14 of the locking arm 11 when the locking arm 11 is in the locking position and the rocker arm 15 is in the rest position. This means that when the carriage 3 is moving in the first direction X the wheel 14 will touch the inclined surface 19 of the rocker arm 15, thus rotating the rocker arm 15 with respect to the frame 2 from the rest position to a tilted position. In the latter position the wheel 14 can pass the rocker arm 15 and the rocker arm 15 will rotate back from the tilted position to the rest position, caused by the weight 18.

The carriage 3 can be moved further in the first direction X until it has passed the rocker arm 15 that corresponds to one of the selected boxes 7 where the product P shall be discharged. Subsequently, the electric motor 8 can stop driving the carriage 3 in the first direction X and start driving the carriage 3 in the second direction Y. This means that the wheel 14 of the locking arm 11 will contact a front face 20 of the rocker arm 15 in its rest position. In other words, the locking arm 11 hooks behind the rocker arm 15, which forces the locking arm 11 to rotate from the locking position to the unlocking position. Consequently, the tilt tray 10 will rotate downwardly such that a product P on the tilt tray 10 will slide into the corresponding box 7. During movement of the carriage 3 in the second direction Y the wheel 14 will be guided by the rocker arm 15 in the rest position of the rocker arm 15 and the locking arm 11 will rotate clockwise in the situation as shown in Fig. 2. During passing and/or after passing the rocker arm 15 the locking arm 11 will rotate back to the locking position due to its weight, but still without the locking pin 13 being received in the recess of the locking arm 11, since the tilt tray 10 including the locking pin 13 is still hanging downwardly.

The sorting device 1 is provided with a resetting guide 21 for moving the tilt tray 10 back to its original horizontal orientation with respect to the chassis 4 when it is driven in the second direction Y back to the input 6. During rotating the tilt tray 10 upwardly the locking pin 13 of the tilt tray 10 will contact an inclined surface 22 of the freely hanging locking arm 11 and move the locking arm 11 from the locking position to its unlocking position, i.e. clockwise in the situation as shown in Fig. 2, such that the locking pin 13 can be received by the recess in the locking arm 11. When the carriage 3 arrives at the input 6 the locking arm 11 is returned in its locking position, thereby locking the locking pin 13 as illustrated in Fig. 2.

The locking arm 11 activates the discharging system mechanically through controlling the electric motor 8 such that the locking arm 11 first passes the rocker arm 15 corresponding to a selected target box 7 in the first direction X and then reversing the carriage 3 in the second direction Y. in fact, a sorting action is controlled by moving to a target box 7 in the first direction and subsequently moving the carriage 3 in the second direction, wherein the locking arm 11 and the rocker arm 15 are automatically interlocked upon moving the carriage 3 in the second direction Y so as to activate the discharging system. It is noted that the weight 18 could be replaced by a spring for moving the rocker arm 15 from the tilted position to the rest position.

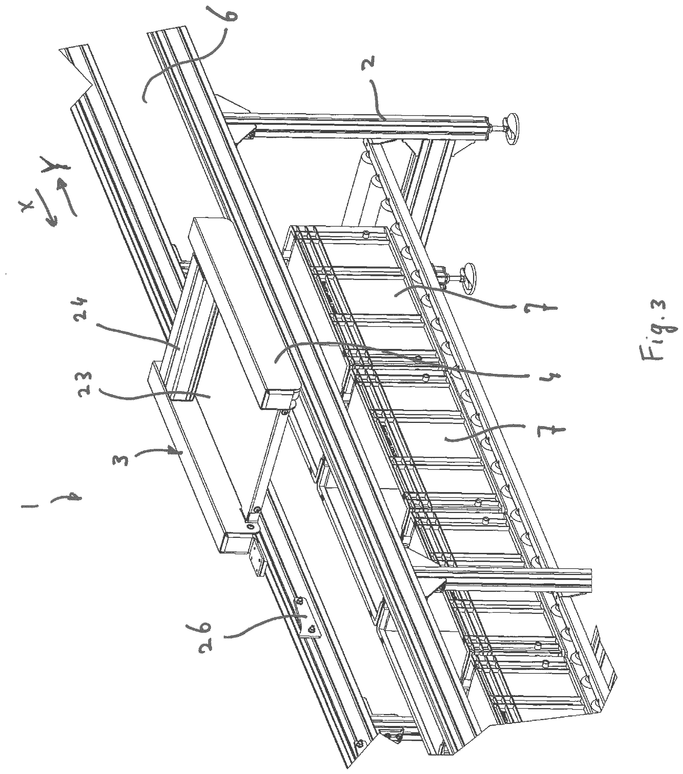

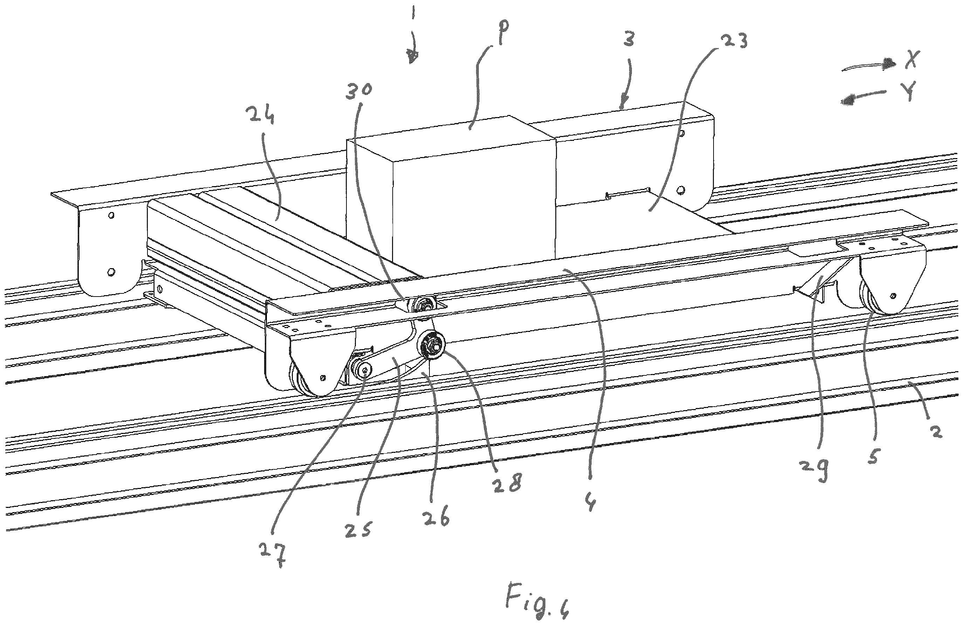

Figs. 3-5 show an alternative embodiment of the sorting device 1. Parts corresponding to the embodiment as shown in Figs. 1 and 2 are indicated by the same reference numbers. In Fig. 4 a side cover of the chassis 4 is omitted for clarity reasons. In this embodiment the chassis 4 of the carriage 3 is provided with a fixed tray 23 for supporting a product P to be discharged into one of the boxes 7. The discharging system comprises a pushing element 24 which is located above the tray 23 and movable across the tray 23 for pushing a product P from the tray 23. The pushing element 24 can be activated by an actuator in the form of a lever 25 which can cooperate with activating elements in the form of lifting members 26 which are located along the sorting path at the respective boxes 7. The lifting members 26 are fixed to the frame 2.

Each of the lifting members 26 has an inclined upper surface of which the height increases in the first direction X. The lever 25 is pivotable with respect to the pushing element 24 through a pivot 27 and has a freely rotatable guide wheel 28 at a distance from the pivot 27. The chassis 4 is fixed to a belt which in turn is driven by an electric motor, which are not visible in Figs. 3 and 4.

When the carriage 3 travels with respect to the frame 2 in the first direction X the guide wheel 28 will contact the lifting member 26 which lifts the lever 25 from a first rotational position to a second rotational position with respect to the pushing element 24. After passing the lifting member 26 the lever 25 rotates back towards the first rotational position, i.e. downwardly due to its weight. If the electric motor then stops driving the chassis 4 in the first direction X and starts driving the chassis 4 in the second direction Y, the guide wheel 28 of the lever 25 hooks behind the lifting member 26, which keeps the pushing element 24 in place with respect to the frame 2 whereas the chassis 4 is travelling in the second direction Y. As a consequence, the product P will be pushed by the pushing element 24 and discharged from the tray 23 into the corresponding box 7 between and below the rails of the frame 2

The chassis 4 is provided with a guide 29 which can cooperate with an auxiliary wheel 30 at the lever 25. The auxiliary wheel 30 is located at a distance from the pivot 27 and the guide wheel 28, in this case at a higher height level than the guide wheel 28. When the guide wheel 28 hooks behind the lifting member 26 and the chassis 4 travels in the second direction Y the guide 29 will contact the auxiliary wheel 30 at a certain moment and lift the guide wheel 28 above the lifting member 26. This means that the pushing element 24 travels further towards the input 6 together with the chassis 4 in the second direction Y, but the pushing element 24 is still at a distance form its original position with respect to the tray 23 when it left the input 6.

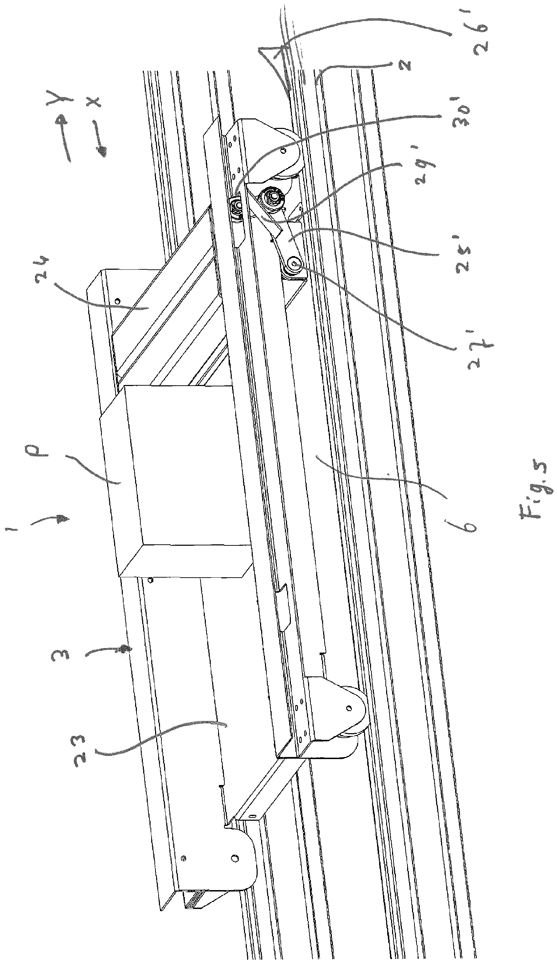

In order to return the pushing element 24 to its original position with respect to the tray 23, the pushing element 24 has a resetting lever 25', which is similar to the lever 25, but located at an opposite end of the pushing element 24 than shown in Fig. 4 and a resetting guide 29' which is similar to the guide 29, whereas at a location beyond the input 6 as seen in the second direction Y the frame 2 is provided with a resetting lifting member 26' comparable to the lifting members 26, see Fig. 5. The resetting lever 25' can hook behind the resetting lifting member 26' when driving the chassis 4 again in the first direction X. As a consequence, the resetting lever 25' holds the pushing element 24 at the same location with respect to the frame 2. After a certain distance travelling in the first direction X a resetting auxiliary wheel 30' of the resetting lever 25' will contact the resetting guide 29' and be raised above the resetting lifting member 26' such that the resetting lever 25' can pass the resetting lifting member 26' and the pushing element 24 is back in its original position as shown in Fig. 5; as a result, the tray 23 is ready for receiving a product P to be sorted. Hence, a sorting action is controlled by moving the chassis 4 to a target box 7 in the first direction X and subsequently moving the chassis 4 in the second direction Y, wherein the discharging system is activated automatically by interlocking the lever 25 and the lifting member 26 upon driving the chassis 4 in the second direction Y.

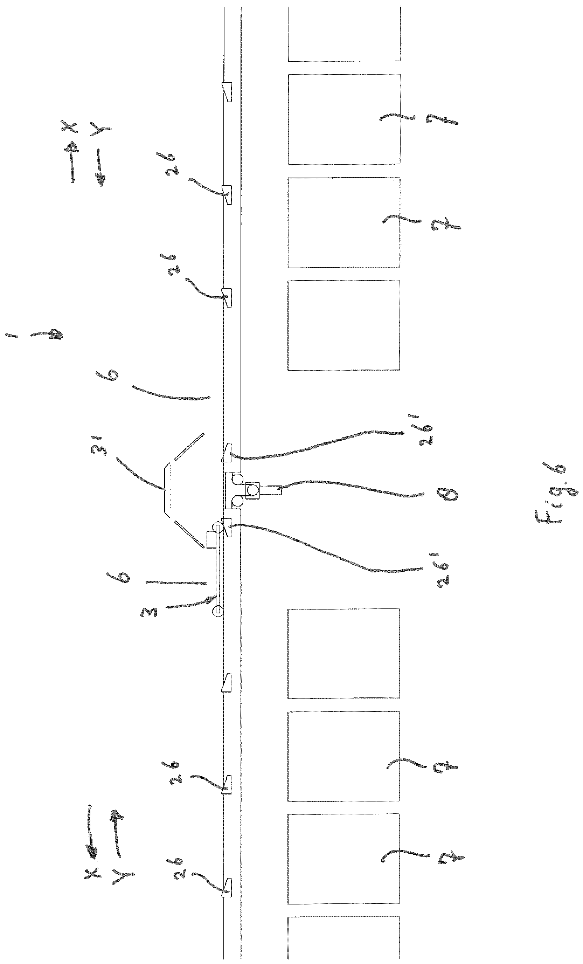

Fig. 6 shows another alternative embodiment of the sorting device 1. This embodiment has a lot of similarities to the embodiment as shown in Figs. 3-5, but has two inputs 6 where the carriage 3 can be positioned to receive a product P to be sorted from a central distribution device 31. Referring to Fig. 6, the carriage 3 can be driven by the electric motor 8 along the sorting path at the left side of the distribution device 31 and the sorting path at the right side of the distribution device 31. In fact, the embodiment as shown in Fig. 6 forms an extension of the embodiment as shown in Figs. 3-5.

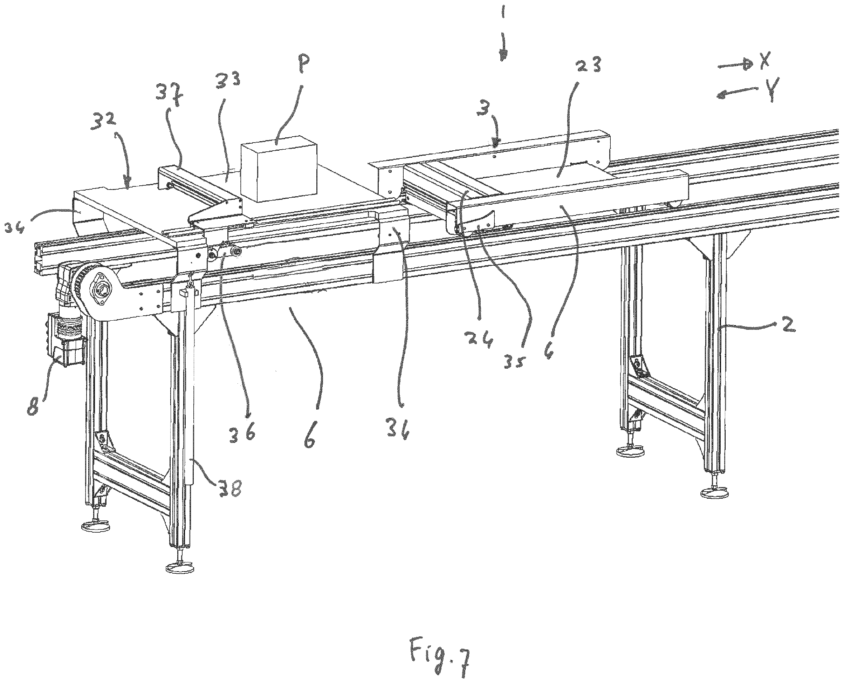

Fig. 7 shows still another alternative embodiment of the sorting device 1. This embodiment has a lot of similarities to the embodiment as shown in Figs. 3-5, but it is also provided with a buffer 32 at the input 6. Parts corresponding to the embodiments as shown in Figs. 1-5 are indicated by the same reference numbers. The buffer 32 comprises a buffer tray 33 which is fixed to the frame 2 through brackets 34 such that the buffer tray 33 is located at a distance above the rails of the frame 2. This allows the carriage 3 to travel below the buffer tray 33.

The chassis 4 is provided with a lifting body 35 which may contact a roller of a lever 36 that in turn is rotatably mounted to a push bar 37 such that when the carriage 3 travels in the second direction Y the lifting body 35 rotates the lever 36 upwardly and passes the lever 36. The push bar 37 is located above the buffer tray 33 and movable across the buffer tray 33 in the first direction X and the second direction Y. After the lifting body 35 passes the lever 36 in the second direction Y the lever 36 falls back due to its weight. When the carriage 3 subsequently travels in the first direction X the roller of the lever 36 hooks behind the lifting body 35, hence moving the push bar 37 in the first direction X. As a consequence, the carriage 3 and the push bar 37 move together in the first direction X and the product P on the buffer tray 33 will be discharged from the buffer tray 33 onto the tray 23 of the carriage 3. When the push bar 37 arrives at a predetermined location along the frame 2 the lever 36 is lifted such that it is decoupled from the carriage 3. A weight 38 which is fixed to the push bar 37 through a cable, urges the push bar 37 to move back to its original position as shown in Fig. 7.

The lever 36, the lifting body 35, the push bar 37 and the weight 38 are part of a buffer discharge system. The buffer discharge system is controlled by driving the chassis 4 in the first and second directions without driving means.

During movement of the carriage 3 to one of the boxes 7 a new product P to be sorted can already be placed onto the buffer tray 33. The buffer 32 can also be combined with the embodiment as shown in Figs. 1 and 2.

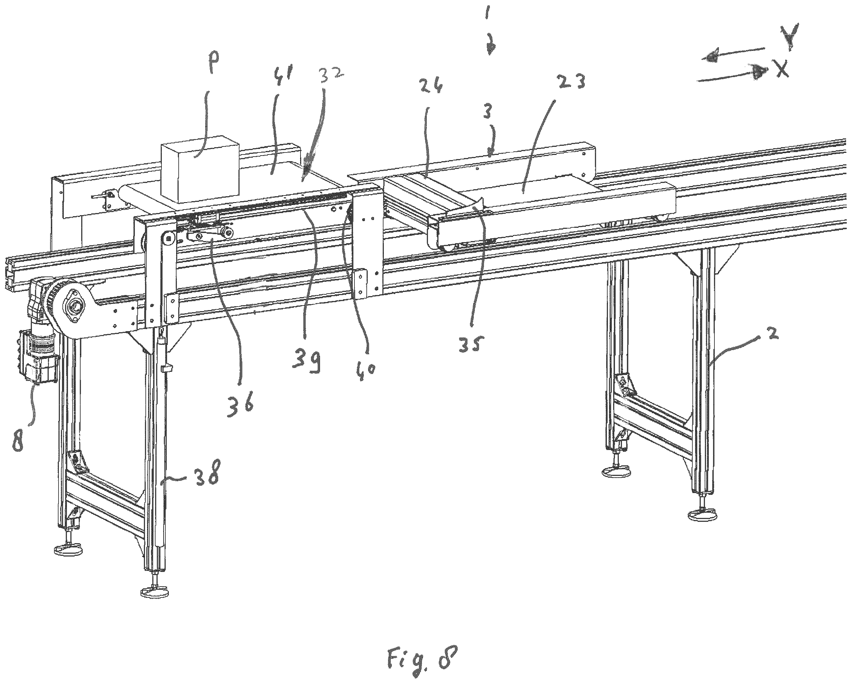

Fig. 8 shows still another alternative embodiment of the sorting device 1 including a buffer 32. This embodiment has a lot of similarities to the embodiment as shown in Fig. 7. Parts corresponding to that embodiment are indicated by the same reference numbers. In this case the lifting body 35 can also hook behind the roller of the lever 36 which in turn is coupled to an endless belt 39. The belt 39 is drivably connected to a wheel 40 which is drivably coupled to a drive shaft for driving and guiding an endless transport belt 41 for supporting and transporting a product P.

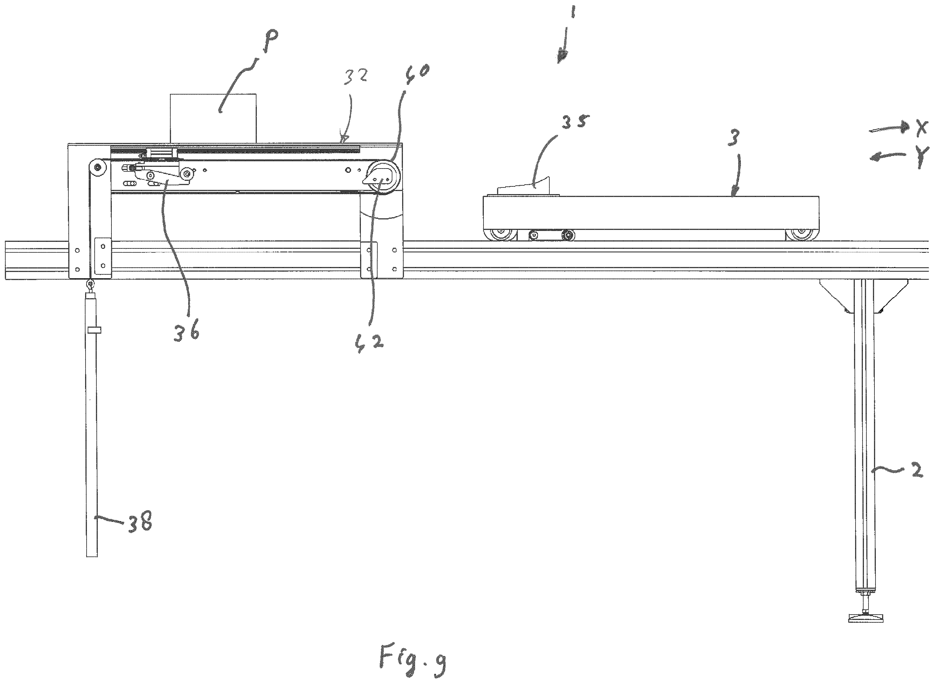

When the lifting body 35 hooks behind the roller of the lever 36 and moves the lever 36 in the first direction X with respect to the frame 2 the transport belt 41 discharges the product onto the tray 23 of the carriage 3. After travelling a certain distance in the first direction X the roller of the lever 36 contacts a lifter 42 located at a fixed position with respect to the frame 2, which lifter 42 decouples the lever 36 from the lifting body 35, see Fig. 9. The weight 38 which is also fixed to the belt 39 urges the belt 39 to move back to its original position as shown in Figs. 8 and 9. The drive shaft of the transport belt 41 may be provided with a freewheel such that only the belt 39 is moved back by the weight 38. This means that when the belt 39 reaches its final position when transferring a product P to the tray 23 a new product P can already be placed onto the transport belt 41. The endless belt 39 may be a toothed belt. In the embodiment as shown in Figs. 8 and 9 the lifting body 35, the lever 36, the transport belt 41, the belt 39, the weight 38 and the lifter 42 are part of a buffer discharge system.

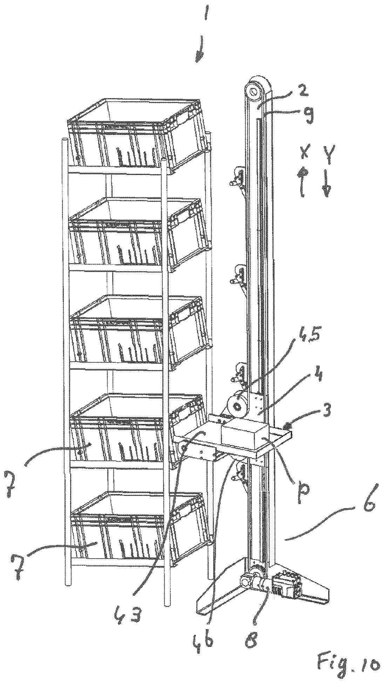

Figs. 10-12 show still another alternative embodiment of the sorting device 1. Parts corresponding to earlier embodiments as described hereinbefore are indicated by the same reference numbers. In this case the sorting path extends vertically and the carriage 3 follows the same track in the first direction X and the second direction Y; the first direction X is upwardly and the second direction is downwardly. The frame 2 comprises an upwardly directed post along which the carriage 3 is movable through the electric motor 8 which in turn drives the endless toothed belt 9. The chassis 4 of the carriage 3 is slidable along the frame 2. The input 6 where a product P can be supplied to the carriage 3 is located at a bottom of the frame 2. The boxes 7 are located above each other next to the frame 2. The discharging system of the carriage 3 comprises a tilt tray 43 which is controlled in a different way than the tilt tray 10 in the embodiment as shown in Figs. 1 and 2.

The tilt tray 43 as shown in Figs. 8-12 is fixed to a toothed wheel 44 which is freely rotatable to the chassis 4 of the carriage 3. As seen from the top down the endless toothed belt 9 is successively guided by an upper wheel 45 which is freely rotatably mounted to the chassis 4, the toothed wheel 44 and a lower wheel 46 which is freely rotatably mounted to the chassis 4. The toothed belt 9 and the toothed wheel 44 are in engagement with each other.

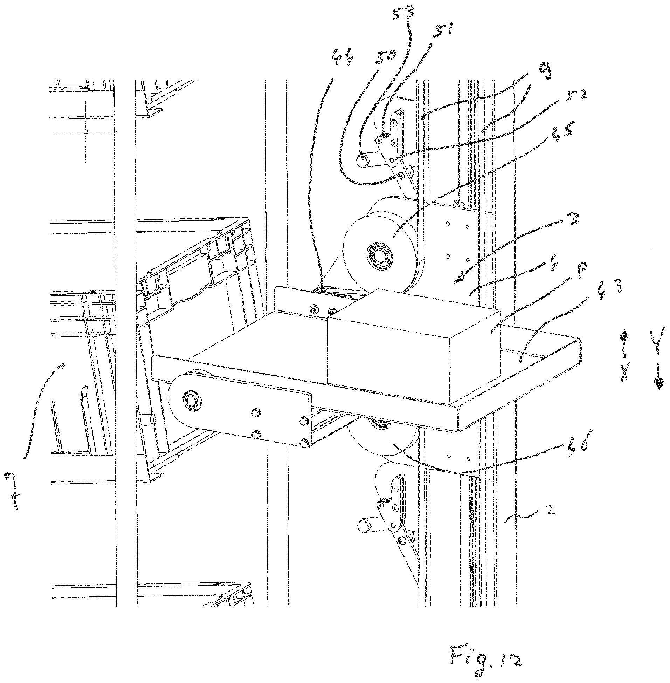

When the tilt tray 43 is in the horizontal orientation it is locked with respect to the chassis 4 in a rotational direction which is opposite to a rotational direction for discharging a product from the tilt tray 43 into one of the boxes 7. In the situation as shown in Fig. 12 the tilt tray 43 is locked in clockwise direction from the horizontal orientation, but rotatable in anti-clockwise direction from the horizontal orientation and back to the horizontal orientation. Hence, when driving the electric motor 8 such that the toothed belt 9 at the upper wheel 45 moves upwardly the toothed belt 9 keeps a fixed position on the toothed wheel 44 and the chassis 4 is moved upwardly by the toothed belt 9, whereas the tilt tray 43 does not rotate with respect to the chassis 4.

The actuator is formed by an L-shaped arm 47, which is mounted to the chassis 4 and rotatable with respect to the chassis 4 through a pivot 48. One leg of the L-shaped arm 47 is provided with a wheel 49 at a distance from the pivot 48, whereas another leg of the L-shaped arm 47 is provided with a weight (not shown) in order to urge the wheel 49 against the frame 2 such that it rolls on the frame 2 when the chassis 4 moves along the frame 2.

At each of the boxes 7 the frame 2 is provided with an activating element in the form of a guide 50 which has a horizontal portion 51, see Fig. 12. When the chassis 4 moves upwardly, the wheel 49 rolls along the frame 2 and the respective guides 50; the L-shaped arm 47 will rotate at each guide 50 and rotate back after passing it due to the weight at the L-shaped arm 47 and the wheel 49 continues rolling along the frame 2. When the chassis 4 is stopped after arriving at one of the horizontal portions 51 corresponding to a selected box 7 and the electric motor 8 drives the toothed belt 9 in opposite direction, the chassis 4 will be driven in the second direction Y, i.e. downwardly, whereas the wheel 49 hooks behind the horizontal portion 51. In fact, the chassis 4 is driven or forced downwardly but does not move downwardly. Consequently, the chassis 4 keeps its position with respect to the frame 2 whereas the toothed belt 9 still exerts a force onto the toothed wheel 44, which causes the toothed wheel 44 including the tilt tray 43 to rotate with respect to the chassis 4, i.e. anti-clockwise in Fig. 12, such that a product P on the tilt tray 43 slides from the tilt tray 43 to the corresponding box 7.

In a next step the toothed belt 9 can be driven in reverse direction, i.e. upwardly at the upper wheel 45, such that the tilt tray 43 is tilted back to its horizontal orientation. As soon as the tilt tray 43 abuts its lock with respect to the chassis 4 the toothed belt 9 will move the chassis 4 upwardly, after which the wheel 49 will leave the guide arm 50 and move towards the frame 2 due to the weight on the second leg of the L-shaped arm 47. Subsequently, the toothed belt 9 can be driven such that the chassis 4 moves downwardly in the second direction Y to the input 6 for receiving a new product P to be sorted.

The guide 50 is rotatable with respect to the frame 2 about a hinge 52 (see Fig. 12) such that the wheel 49 can urge the guide 50 away from the frame 2 to create a passage through which the wheel 49 can pass the guide 50 when the chassis 4 moves downwardly. The guide 50 moves back after the wheel 49 has passed due to a reverse force caused by a weight 53. This means that when the wheel 49 moves upwardly during a next sorting action it will follow the guides 50 until it reaches a target box as described hereinbefore. In this embodiment a sorting action is controlled by moving the chassis 4 to a well-defined location at a selected target box 7 in the first direction X and subsequently moving the chassis 4 in the second direction Y.

In the embodiment as shown in Figs. 3-5 the chassis 4 is driven and moved in the second direction Y when the actuator, i.e. the lever 25, and the activating element, i.e the lifting member 26, hook behind each other, whereas the actuator keeps the pushing element 24 at a standstill with respect to the frame 2. In the embodiment as shown in Figs. 10-12 the chassis 4 is not moved when it is driven, i.e. urged, in the second direction Y when the actuator, i.e. the L-shaped arm 47, and the activating element, i.e. the guide 50, hook behind each other, but the tilt tray 43 is rotated with respect to the stationary chassis 4.

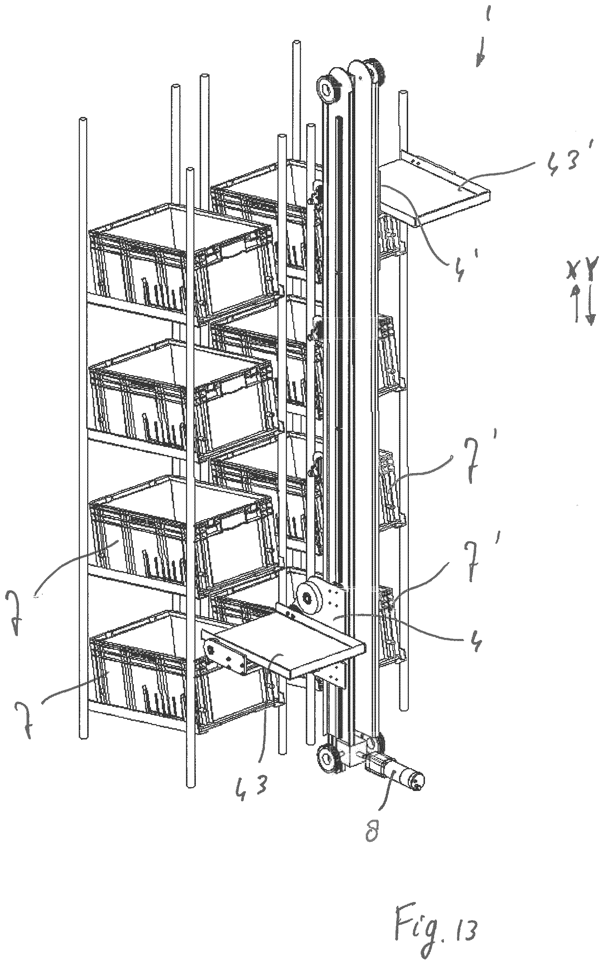

Fig. 13 shows still another alternative embodiment of the sorting device 1. This embodiment has a lot of similarities to the embodiment as shown in Figs. 10-12. Corresponding parts are indicated by the same reference numbers. In this case the sorting device 1 is provided with two parallel columns including boxes 7, 7' for receiving products P. The electromotor 8 drives two endless toothed belts 9 in a similar way as in the embodiment as shown in Figs. 10-12, but in opposite directions. This means that when one chassis 4 is moved upwardly, the other one is moved downwardly. An advantage of this embodiment is that the weights of both chassis 4, 4' may balance each other.

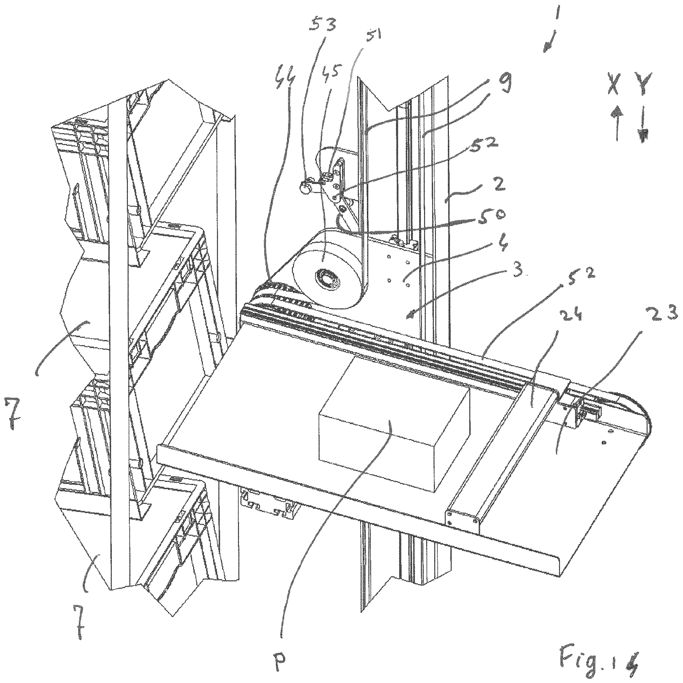

Fig. 14 shows still another alternative embodiment of the sorting device 1. Parts which correspond to parts in embodiments as described hereinbefore are indicated by the same reference numbers. Similar to the embodiment as shown in Figs. 10-12 the frame 2 comprises an upwardly directed post along which the carriage 3 is movable through the electric motor 8 which in turn drives the endless toothed belt 9. The chassis 4 of the carriage 3 is slidable along the frame 2. The input 6 where a product P can be supplied to the carriage 3 is located at a bottom of the frame 2. The boxes 7 are located above each other next to the frame 2. The carriage 3 has a fixed tray 23, which is fixed to the chassis 4 like the fixed tray 23 in the embodiments as shown in Figs. 3-9. The discharging system of the carriage 3 comprises the pushing element 24 similar to the embodiments as shown in Figs. 3-9, but it is controlled in a different manner.

The pushing element 24 is fixed to an endless auxiliary toothed belt 52, which is in engagement with the toothed wheel 44. The pushing element 24 is movable with respect to the tray 23 between a rest position as shown in Fig. 14 and a discharging position, left from the position of the pushing element in Fig. 14. In the rest position the pushing element 24 is locked with respect to the tray 23 in a direction from the discharging position to the rest position. The toothed belt 9 for driving the carriage 3 is also in engagement with the toothed wheel 44. In contrast to the toothed wheel 44 in the embodiment as shown in Figs. 10-12, the toothed wheel 44 in the embodiment as shown in Fig. 14 is freely rotatable to the chassis 4. This embodiment operates in a similar manner as the embodiment as shown in Figs. 10-12. When driving the electric motor 8 such that the toothed belt 9 at the upper wheel 45 moves upwardly the carriage 3 is moved upwardly in the first direction X by the toothed belt 9 since the toothed belt 9 is in engagement with the toothed wheel 44 and the pushing element 24 is locked with respect to the chassis 4.

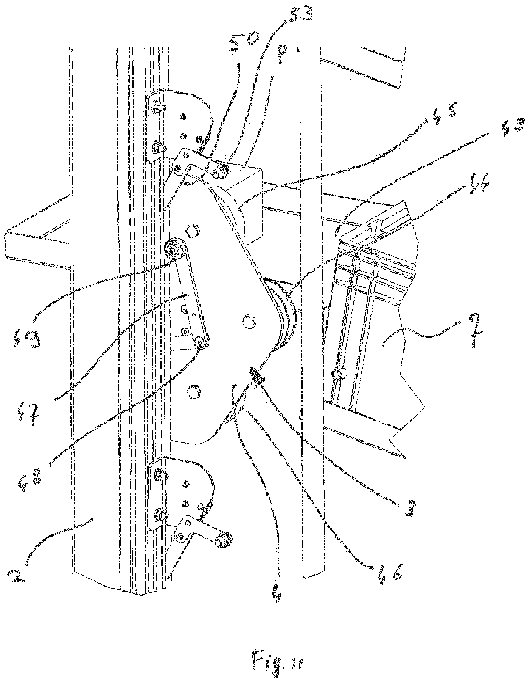

Although not visible in Fig. 14, but referring to the mechanism as shown in Fig. 11, when the chassis 4 moves upwardly, the wheel 49 rolls along the frame 2 and the respective guides 50; the L-shaped arm 47 will rotate at each guide 50 and rotate back after passing it due to the weight at the L-shaped arm 47, similar to the embodiment as shown in Figs. 10-12. When the chassis 4 is stopped after the wheel 49 arrives at one of the horizontal portions 51 corresponding to the selected box 7 and the electric motor 8 drives the toothed belt 9 in opposite direction, the chassis 4 will not move downwardly since the wheel 49 hooks behind the horizontal portion 51. As a consequence, the toothed belt 9 drives the toothed wheel 44 which in turn drives the auxiliary toothed belt 52. This means that the pushing element 24 is moved towards the boxes 7 and will discharge the product P from the fixed tray 23. After the pushing element 24 reaches a final position with respect to the tray 23 the electric motor 8 will drive the toothed belt 9 in reversed direction such that the toothed belt 9 at the upper wheel 45 moves upwardly. This forces the pushing element 24 to move back to its original position as shown in Fig. 14 and after being stopped by a stop element (not shown) the toothed belt 9 moves the carriage 3 upwardly. In order to create this sequence of movements resistance against moving the pushing element 24 to its original position should be lower than resistance against moving the carriage 3 upwardly along the frame 2. The wheel 49, see Fig. 11, will leave the horizontal portion 51 and be forced to contact the frame 2. Then, the electric motor 8 can be reversed again such that the toothed belt 9 drives and moves the chassis 4 downwardly in a similar way as described in relation to the embodiment as shown in Figs. 10-12.

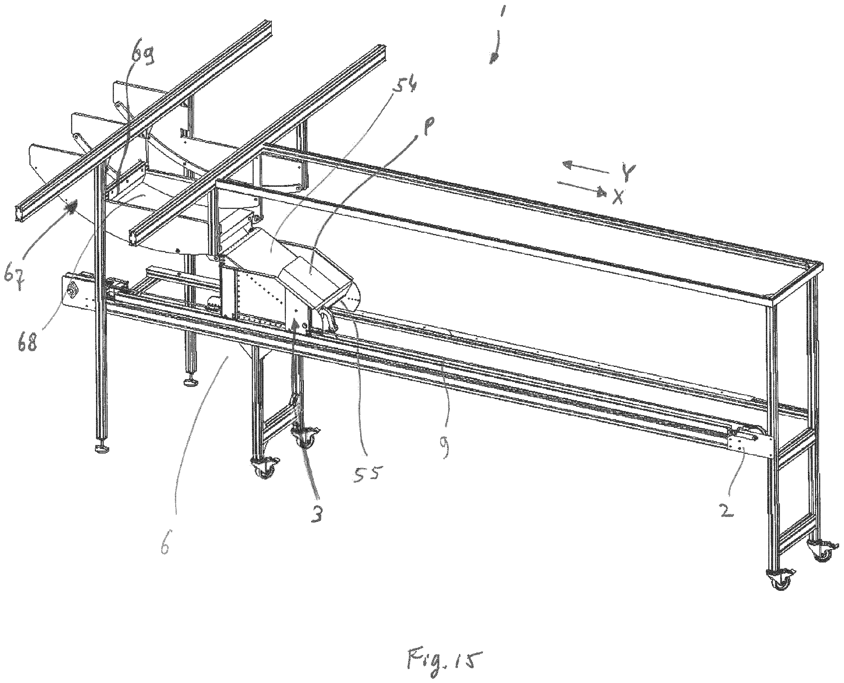

Figs. 15-17 show still another alternative embodiment of the sorting device 1. Parts corresponding to earlier embodiments as described hereinbefore are indicated by the same reference numbers. In this case the carriage 3 has an inclined tray 54 which has a fixed position with respect to the chassis 4. The carriage 3 is provided with a door 55 at a lower end of the inclined tray 54. When the carriage 3 is moved in the first direction X to a selected box 7 where the product P should be discharged, the discharging system of the carriage 3 is activated.

The discharging system of the carriage 3 comprises the door 55, which can be opened through an actuator. When the door 55 is opened the product P slides downwardly on the inclined tray 54 by gravity and leaves the carriage 3. Similar to the embodiment as shown in Figs. 3 and 4 the frame 2 is provided with a series of lifting members 26 at the corresponding boxes 7 below and between the rails of the frame 2. The carriage 3 is provided with a control plate 56 which is fixed to the door 55 such that the door 55 and the control plate 56 are rotatable about a common axis of rotation 57.

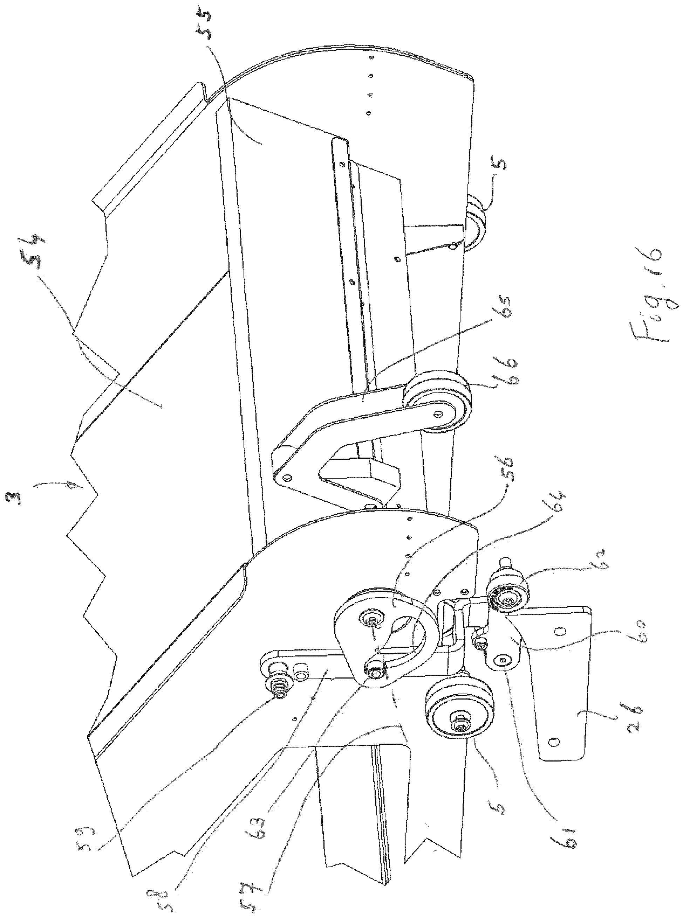

Furthermore, the carriage 3 comprises a lever 58 which is pivotally mounted to the chassis 4 through a first pivot 59, whereas an arm 60 is pivotally mounted to the lever 58 through a second pivot 61. In this embodiment the actuator of the invention is formed by the arm 60. A free end of the arm 60 has a wheel 62 which can contact the lifting member 26. At a distance of the first pivot 59 the lever 58 is provided with a protrusion 63 which is located within a hole 64 in the control plate 56. When the door 55 is closed the protrusion 58 is located in a narrow portion of the hole 64 which prevents the door 55 from opening. This condition is shown in Fig. 16.

When the carriage 3 is moved in the first direction X towards a selected box 7 where the product P should be discharged, the wheel 62 runs on the corresponding lifting member 26 causing the arm 60 to rotate upwardly about the second pivot 61 without rotating the lever 58 about the first pivot 59. After passing the lifting member 26 the arm 60 rotates back in downward direction due to its weight and abuts a stop (not shown) which keeps the arm 60 in a fixed position with respect to the lever 58 as shown in Fig. 16. In this case the lever 58 and the arm 60 form an L shape.

Then, the carriage 3 is moved in the second direction Y causing the wheel 62 to hook behind the lifting member 26. As a result, the lever 58 and the arm 60 are rotated together about the first pivot 59, hence forcing the protrusion 63 from its location in the narrow portion of the hole 64, as shown in Fig. 16, to a location within a wide portion of the hole 64 in the control plate 56. This allows the door 55 to open by gravity and possibly supported by the weight of the product P which may rest against the door 55. The hole 64 in the control plate 56 is shaped such that the door 55 opens to a position in which the door 55 is at least aligned with the inclined tray 54 in order to facilitate the product P to leave the carriage 3. The hole 64 is also shaped such that during opening the door 55 the lever 58 is forced to an orientation in which the wheel 62 is raised above the lifting member 26.

The sorting device 1 is provided with a closing mechanism for closing the door 55 when the carriage 3 moves in the second direction Y. The closing mechanism has a lever 65 including a freely rotatable wheel 66 at its free end and a resetting member (not shown) at the frame 2. When the carriage 3 moves in the second direction Y to the input 6 the wheel 66 contacts the resetting member which closes the door 55 and causes the control plate 56 to rotate such that the protrusion 58 on the lever 58 arrives again in the narrow portion of the hole 64 in the control plate 56 so as to lock the door 55 with respect to the chassis 4.

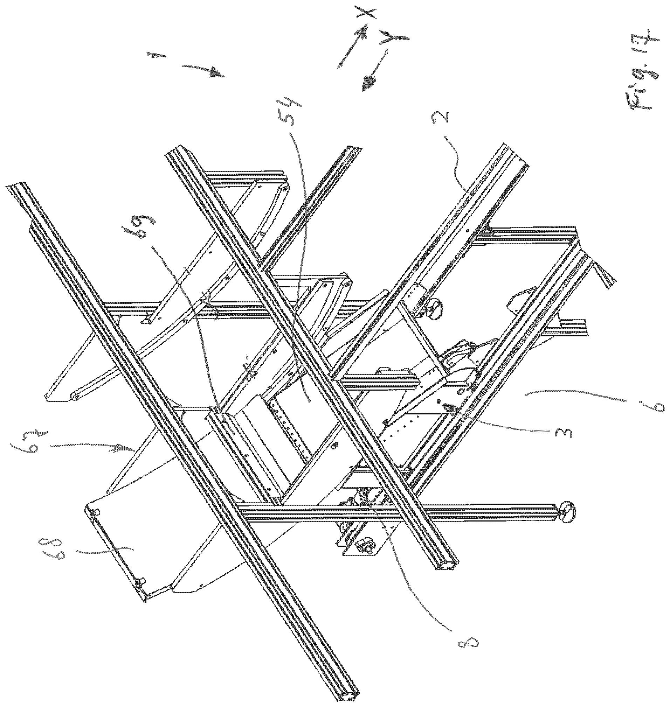

The embodiment as shown in Figs. 15-17 also comprises a buffer 67 at the input 6. The buffer 67 is provided with a bearing body in the form of a curved plate 68 which is movable in its longitudinal direction on parallel curved rails of the frame 2, for example through rollers (not shown). The buffer 67 has a pushing bar 69 which has a fixed position with respect to the frame 2 and extends above the curved plate 68. Fig. 15 shows a rest position of the curved plate 68, in which rest position the curved plate 68 is located in a lower position with respect to the frame 2 due to its weight. A product can be placed on the curved plate 68 when it is in its rest position, for example by a conveyor which is located above the buffer 67. When the chassis 3 moves in the second direction Y the chassis 4 will abut the curved plate 68 and push it upwardly with respect to the frame 2. This condition is shown in Fig. 17. A product P on the curved plate 68 will hit the pushing bar 69 and automatically be pushed from the curved plate 68 onto the inclined tray 54 of the carriage 3. After that the carriage 3 can be moved in the first direction X to discharge the product P at a desired destination as described hereinbefore. The curved plate 68 of the buffer 67 will return automatically to its original position due to its weight.

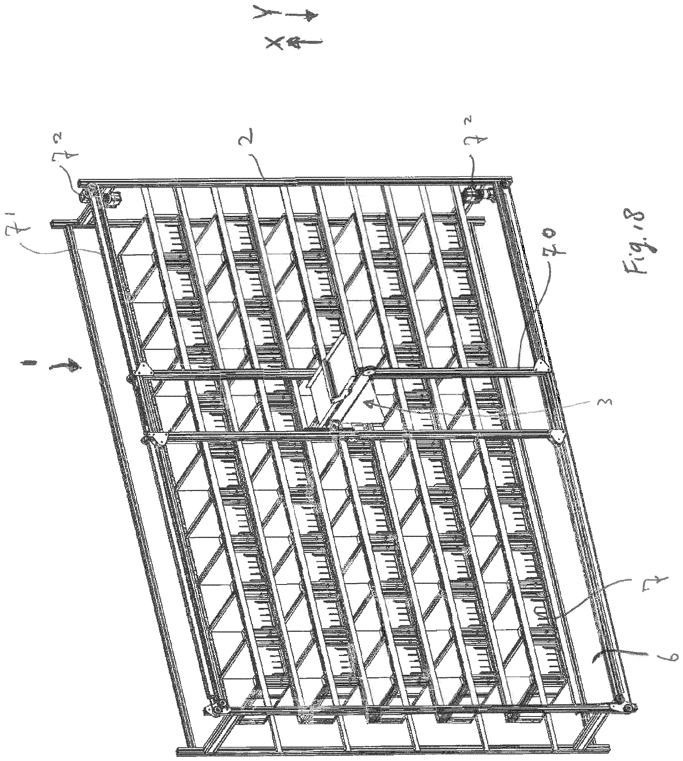

Figs. 18-20 show still another alternative embodiment of the sorting device 1. Parts corresponding to earlier embodiments as described hereinbefore are indicated by the same reference numbers. In this case the frame 2 comprises a plurality of columns of boxes 7 for receiving a product P. The frame 2 supports an auxiliary frame 70 along which the carriage 3 is displaceable in vertical direction. The auxiliary frame 70 allows the carriage 3 to be displaced in horizontal direction with respect to the frame 2. The sorting device 1 is provided with a toothed belt 71 which is drivably engaged with two electric motors 72 such that when the electric motors 72 are driven in the same rotational directions the carriage 3 moves in vertical direction with respect to the auxiliary frame 70 whereas the auxiliary frame 70 remains at a fixed horizontal position and when they are driven in opposite directions the auxiliary frame 70 moves in horizontal direction with respect to the frame 2 whereas the carriage 3 remains at a fixed vertical position with respect to the auxiliary frame 70.

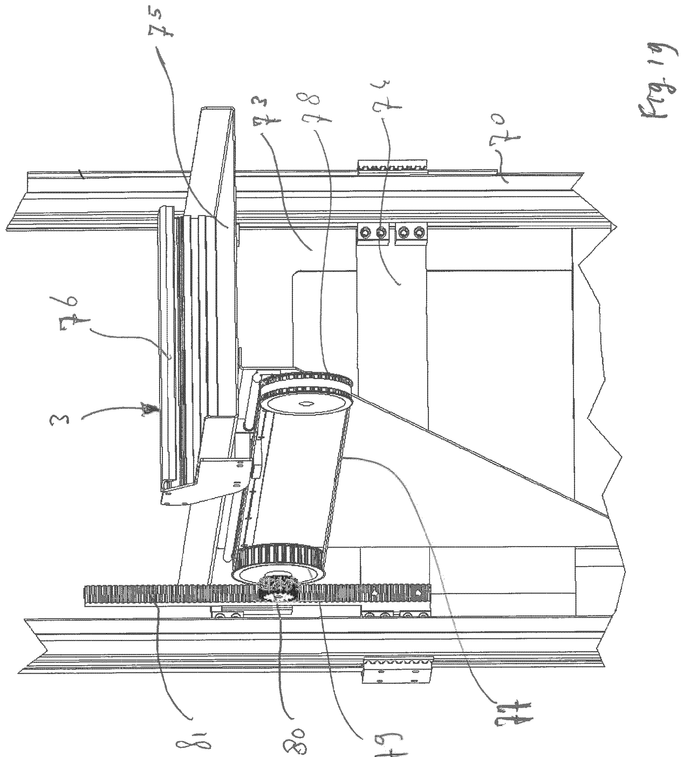

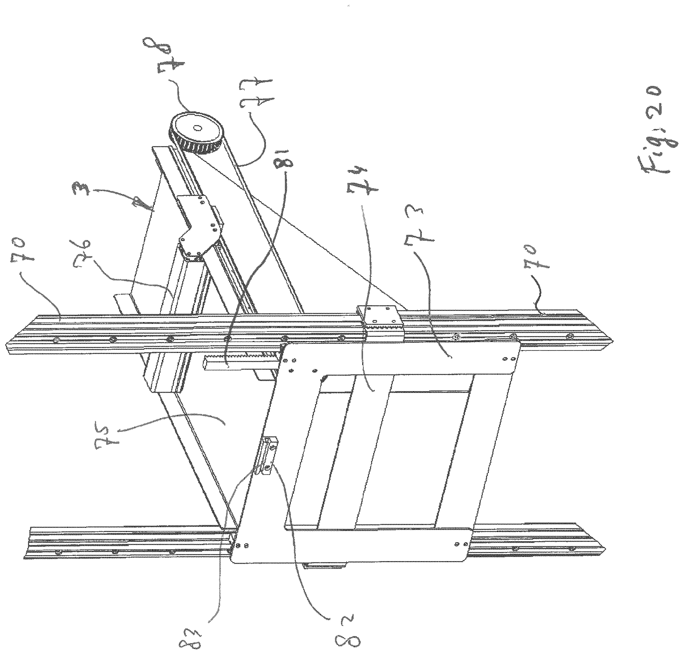

Referring to Figs. 19 and 20, the carriage 3 has a auxiliary chassis 73 and the chassis 74. The chassis 74 is fixed to the toothed belt 71 and movable along the auxiliary frame 70 in vertical direction. The auxiliary chassis 73 suspends from the chassis 74 and rests freely on he chassis 74. Hence, when the chassis 74 is moved upwardly the auxiliary chassis 73 is lifted and moves simultaneously in upward direction, i.e. in the first direction X.

The carriage 3 has a support tray 75 which is supported by and fixed to the auxiliary chassis 73. The carriage 3 is also provided with a pushing element 76 for pushing a product P from the support tray 75. The pushing element 76 is fixed to an endless toothed belt 77 which is engaged with a first toothed wheel 78 and a second toothed wheel 79. The second toothed wheel 79 is fixed to a pinion 80 which is in engagement with an upright rack 81. The rack 81 is fixed to the chassis 74.

The auxiliary chassis 73 has a block 82 that comprises a horizontal slot 83 for receiving a rib (not shown) at the frame 2. The frame 2 comprises such a rib at each box 7. In fact, the activating elements in this embodiment are formed by the ribs and the actuator is formed by the block 82 on the auxiliary chassis 73.

The input 6 may be located below the lower row of boxes 7. When a product P is placed on the support tray 75 at the input 6 and must be discharged to a box 7 at a target column and row of the frame 2, both electric motors 72 can be driven in the same rotational directions such that the chassis 74 moves upwardly in the first direction X along the auxiliary frame 70 together with the auxiliary chassis 73 until it arrives at the target row. Subsequently, the electric motors 72 can be driven in opposite rotational directions such that the auxiliary frame 70 is moved in horizontal direction to the target column until the rib at the target box 7 is received in the slot 83 of the block 82 at the auxiliary chassis 73. This means that the auxiliary chassis 73 is locked in vertical direction at the sorting path.

In a next step, both electric motors 72 can be driven in the same rotational directions such that the chassis 74 is driven downwardly in the second direction Y along the frame 2. The chassis 74 will be moved in the second direction Y, but the auxiliary chassis 73 and the support tray 75 will stay in place. This means that the rack 81 will drive the pinion 80 such that the second toothed wheel 79 will drive the toothed belt 77. As a result, the pushing element 76 pushes a product P from the support tray 75 towards the target box 7. The toothed belt 77 to which the pushing element 76 is fixed, the first toothed wheel 78, the second toothed wheel 79, the pinion 80 and the rack 81 are part of a transmission between the pushing element 76 and the chassis 74.

The pushing element 76 can be returned to its original position by driving both electric motors 72 in the same rotational directions such that the chassis 74 moves upwardly along the auxiliary frame 70, hence driving the pinion 80 by the rack 81 in opposite direction. This causes the pushing element 76 to return to its original position with respect to the support tray 75. After that, the electric motors 72 can be driven in opposite rotational directions such that the auxiliary frame 70 can be moved in horizontal direction until the rib has left the slot 83. This allows the auxiliary chassis 73 of the carriage 3 to be moved in vertical direction again together with the chassis 74.

In this embodiment the actuator is formed by the block 82 which activates the pushing element 76 when the rib and the slot 83 hook behind each other and the chassis 74 is driven in the second direction Y along the sorting path. In contrast to the embodiments as described hereinbefore the carriage 3 does not always follow the same track in the first direction X and the second direction Y, since the cooperation of the ribs and the slot 83 requires that the carriage 3 must be moved in horizontal direction, i.e. transverse to the sorting path, to lock and unlock them to and from each other in the second direction Y. It is conceivable to apply an alternative actuator and cooperating alternative activating elements, for example similar to the actuator and the activating elements as used in the embodiments as described hereinbefore.

The invention is not limited to the embodiments shown in the drawings and described hereinbefore, which may be varied in different manners within the scope of the claims and their technical equivalents. For example, the belts, toothed belts or the like may be replaced by other types of cables, cords, chains or the like.

## Claims

1. A sorting device (1), comprising a frame (2), a carriage (3) for supporting a product (P) to be sorted, an input (6) where a product (P) to be sorted is receivable by the carriage (3), a plurality of receiving locations (7) for receiving a product (P) that is discharged from the carriage (3) when the carriage (3) is located at a selected one of the receiving locations (7), which receiving locations (7) are located next to each other along a sorting path, wherein the carriage (3) has a chassis (4, 74) that is supported by the frame (2) and drivable with respect to the frame (2) in longitudinal direction of the sorting path in a first direction (X) and an opposite second direction (Y), wherein the carriage (3) is provided with a discharging system (10, 24, 43, 55, 76) for discharging a product (P) from the carriage (3) and an actuator (11, 25, 47, 60, 83) for activating the discharging system (10, 24, 43, 55, 76), wherein at the receiving locations (7) the frame (2) is provided with respective activating elements (15, 26, 50), which are selectively lockable to the actuator (11, 25, 47, 60, 83) of the carriage (3) such that the actuator (11, 25, 47, 60, 83) is locked with respect to an activating element (26, 50) corresponding to a selected one of the receiving locations (7) when driving the chassis (4, 74) with respect to the frame (2) in the second direction (Y) at the sorting path, wherein the chassis (4, 74) is drivable in the first direction (X) towards an activating element (15, 26, 50) corresponding to a selected one of the receiving locations (7) so as to lock the actuator (11, 25, 47, 60, 83) and the activating element (15, 26, 50) to each other, wherein the discharging system (10, 24, 43, 55, 76) is adapted such that when the actuator (11, 25, 47, 60, 83) and the activating element (15, 26, 50) are locked to each other the actuator (11, 25, 47, 60, 83) activates the discharging system (10, 24, 43, 55, 76) upon driving the chassis (4, 74) in the second direction (Y) at the sorting path.

2. A sorting device (1) according to claim 1, wherein the actuator (11, 25, 47, 60) is movable with respect to the chassis and/or the activating elements (15, 50) are movable with respect to the frame, wherein the actuator (11, 25, 47, 60) and the activating elements (15, 50) are adapted such that during driving the chassis (4) in the first direction (X) towards a selected receiving location (7) the actuator (11, 25, 47, 60) contacts at least one of the activating elements (15, 50) thereby moving the actuator (25, 47, 60) with respect to the chassis (4) and/or the activating element (15) with respect to the frame (2) such that the actuator (11, 25, 47, 60) can freely pass the activating element (15, 50), whereas after the actuator (11, 25, 47, 60) passes the activating element (15, 50) of the selected receiving location (7) the actuator (25, 47, 60) is forced back towards an original position thereof and/or the activating element (15) is forced back towards an original position thereof, whereas upon driving the chassis (4) in the second direction (Y) after the actuator (11, 25, 47, 60) passes the activating element (15, 50) corresponding to the selected receiving location (7) the actuator (11, 25, 47, 60) and the activating element (15, 50) hook behind each other so as to lock the actuator (11, 25, 47, 60) with respect to the activating element (15, 50) upon driving the chassis (4) with respect to the frame (2) in the second direction (Y).

3. A sorting device (1) according to claim 2, wherein the discharging system comprises a tilt tray (10) for supporting a product (P), which tilt tray (10) is rotatably mounted to the chassis (4) through a tilt tray hinge (12), wherein the actuator comprises a locking member (11) for locking the tilt tray (10) with respect to the chassis (4) when the chassis (4) is driven in the first direction (X), wherein upon driving the chassis (4) in the second direction (Y) after the locking member (11) passes the activating element (15) corresponding to the selected receiving location (7) the locking member (11) and the activating element (15) hook behind each other thereby de-locking the locking member (11) and the tilt tray (10) with respect to each other to allow the tilt tray (10) to tilt downwardly by gravity.

4. A sorting device (1) according to claim 2, wherein the carriage (3) comprises a tray (23) for supporting a product (P) and the discharging system comprises a pushing element (24) which is located above the tray (23) and movable with respect to the tray (23) in a direction along the sorting path, wherein the actuator (25) is mounted to the pushing element (24), wherein upon driving the chassis (4) in the second direction (Y) after the actuator (25) passes the activating element (26) corresponding to the selected receiving location (7) the actuator (25) and the activating element (26) hook behind each other thereby holding the pushing element (24) at a fixed place with respect to the frame (2).

5. A sorting device (1) according to claim 2, wherein the discharging system comprises a tilt tray (43) for supporting a product (P), which tilt tray (43) is mounted to the chassis (4) and rotatable with respect to the chassis (4) between a transporting position and an inclined discharging position and locked with respect to the chassis (4) from the transporting position in a direction opposite to the discharging position, a driving wheel (44) which is fixed to the tilt tray (43) such that the driving wheel (44) and the tilt tray (43) are rotatable with respect to the chassis (4) about a common tilting axis and an endless driving belt (9) which is in engagement with the driving wheel (44) such that when the driving belt (9) drives the driving wheel (44) in a direction in which it is locked with respect to the chassis (4) the chassis (4) is driven in the first direction (X) through the driving wheel (44) thereby moving in the first direction (X), whereas the chassis (4) is held at a fixed position by the actuator (49) when the driving belt (9) drives the chassis (4) in the second direction (Y) direction through the driving wheel when the actuator (49) and the activating element (47) hook behind each other, hence rotating the tilt tray (43) from the transporting position to the discharging position whereas the chassis (4) remains at the same position with respect to the frame (2).

6. A sorting device (1) according to claim 2, wherein the carriage (3) comprises a tray (23) for supporting a product (P) and the discharging system comprises a pushing element (24) which is located above the tray (23) and movable with respect to the tray (23) between a rest position and a discharging position, wherein in the rest position the pushing element (24) is locked with respect to the tray (23) in a direction from the discharging position to the rest position, wherein a driving wheel (44) is rotatably mounted to the chassis (4) and drivably coupled to the pushing element (24) through an endless belt (52), wherein an endless driving belt (9) is in engagement with the driving wheel (44) such that when the driving belt (9) drives the driving wheel (44) in one direction when the pushing element (24) is in the rest position the chassis (4) is moved in the first direction (X) through the driving wheel (44), whereas the chassis (4) is held at a fixed position by the actuator (49) when the driving belt (9) drives the driving wheel (44) in opposite direction and the actuator (49) and the activating element (47) hook behind each other, hence moving the pushing element (24) from the rest position to the discharging position through the endless belt (52).

7. A sorting device (1) according to claim 2, wherein the discharging system comprises an inclined tray (54) for supporting a product (P) and a door (55) at a lower end of the inclined tray (54) for retaining the product (P) on the inclined tray (54), which door is tiltable with respect to the chassis (4), wherein the actuator (60) comprises a locking member (58) for locking the door (55) with respect to the chassis (4) when the chassis (4) is driven in the first direction (X), wherein upon driving the chassis (4) in the second direction (Y) after the actuator (60) passes the activating element (26) corresponding to the selected receiving location (7) the actuator (60) and the activating element (26) hook behind each other thereby de-locking the door (55) and the locking member (58) with respect to each other to allow the door (55) to tilt downwardly by gravity.

8. A sorting device (1) according to any one of the preceding claims, wherein the sorting path extends horizontally.

9. A sorting device according to claim 2, wherein the sorting path extends vertically, wherein the carriage (3) comprises an auxiliary chassis (73) for supporting a product (P), wherein the actuator (82) is located at the auxiliary chassis (73), which auxiliary chassis (73) rests freely on the chassis (74) such that the auxiliary chassis (73) is moved simultaneously with the chassis (73) in the first direction (X) when the chassis (73) is driven in the first direction (X) and the actuator (83) and the activating element corresponding to the selected receiving location (7) are not locked with respect to each other, wherein the carriage (3) comprises a transmission (77-81) which is adapted such that upon driving the chassis (4) in the second direction (Y) when the actuator (83) and the activating element corresponding to the selected receiving location are locked to each other the chassis (4) is moved in the second direction (Y) and the discharging system (76) is operated through the transmission (77-81).

10. A sorting device (1) according to claim 9, wherein the auxiliary chassis (73) comprises a tray (75) for supporting a product (P) and the discharging system comprises a pushing element (76) which is located above the tray (75) and movable with respect to the tray (75), wherein the transmission comprises an endless belt (77) to which the pushing element (76) is fixed, wherein the endless belt (77) is drivably coupled to a driving wheel (79) which is rotatably mounted to the auxiliary chassis (73), wherein the driving wheel (79) is drivably coupled to a pinion (80) which in turn meshes with a rack at the chassis (74) .

11. A sorting device (1) according to any one of the preceding claims, wherein the carriage (3) follows the same track in the first direction (X) and the second direction (Y).

12. A sorting device according to any one of the claims 1-10, wherein the chassis (4) is also drivable with respect to the frame (2) in transverse direction of the sorting path in order to drive the chassis (4) to an activating element corresponding to a selected one of the receiving locations (7) for locking the actuator (81, 82) and the activating element to each other.

13. A sorting device (1) according to claim 8, wherein at the input (6) the sorting device (1) is provided with a buffer (32, 67) for supporting a product to be received by the carriage (3), wherein the buffer (32, 67) comprises a buffer discharge system (36-41, 68, 69) for transferring a product (P) from the buffer (32, 76) to the carriage (3), which buffer discharge system (36-41, 68, 69) cooperates with the carriage (3) such that the buffer discharge system (36-41, 68, 69) is activated by the chassis (4) when the chassis (4) engages the buffer discharge system (36-41, 68, 69).

14. A sorting device (1) according to claim 13, wherein the carriage (3) is movable below the buffer (32) in the first direction (X) and the second direction (Y), wherein the buffer discharge system (36-41) cooperates with the carriage (3) such that when the chassis (4) is driven in the second direction (Y) below the buffer (32) the chassis (4) and the buffer discharge system (36-41) hook behind each other such that when the chassis (4) subsequently moves in the first direction (X) the chassis (4) urges the buffer discharge system (36-41) in the first direction (X), hence allowing the buffer discharge system (36-41) to discharge a product from the buffer (32) to the carriage (3), wherein the sorting device (1) is provided with a decoupling system (42) for decoupling the chassis (4) from the buffer discharge system (36-41) after a product (P) is transferred from the buffer (32) to the carriage (3).

15. A sorting device (1) according to claim 13, wherein the buffer discharge system comprises a bearing body (68) for supporting a product (P) which is movable with respect to the frame (2) and a pushing bar (69) which is located above the bearing body (68) and fixed to the frame (2), wherein the bearing body (68) cooperates with the carriage (3) such that when the chassis (4) is driven in the second direction (Y) against the bearing body (68) the bearing body (68) is moved in the second direction (Y) below the pushing bar (69), wherein the buffer (67) is provided with a reset system for moving the bearing body (68) in the first direction (X) when the chassis (3) moves in the first direction (X).
